# EUROPÄISCHE PATENTSCHRIFT

(11) **EP 2 653 417 B1**
(45) Veröffentlichungstag und Bekanntmachung des Hinweises auf die Patenterteilung: **18.11.2015**
(21) Anmeldenummer: 12164477.7
(22) Anmeldetag: 17.04.2012
(51) Int. Cl.: B65G 57/24, B65G 57/06

(54) **Vorrichtung und Verfahren zum Ablegen von einer aus zumindest einem Paket gebildeten Paketreihe auf einer Palette**
Device and method for laying series of packages comprising at least one package on a palette
Dispositif et procédé de dépôt d'une série de paquets formés à partir d'au moins un paquet sur une palette

(43) Veröffentlichungstag der Anmeldung: 23.10.2013
(73) Patentinhaber: Segbert GmbH & Co. KG, 48683 Ahaus (DE)
(72) Erfinder: Segbert, Klaus, 48599 Gronau (DE); Reufer, Hubert, 48619 Heek (DE)
(74) Vertreter: von dem Borne, Andreas

(56) Entgegenhaltungen:
- DE-A1- 3 300 329
- DE-A1- 3 614 256
- FR-A1- 2 387 881
- NL-A- 7 400 244

## Beschreibung

Die Erfindung betrifft eine Vorrichtung zum Ablegen von einer aus zumindest einem Paket gebildeten Paketreihe auf einer Palette, mit einer Paketreihenbildungsstraße zur Ausbildung einer Paketreihe und mit einer Übergabestation, wobei die Paketreihe von der Paketreihenbildungsstraße an die Übergabestation übergebbar ist, wobei die Übergabestation zumindest ein Fördermittel zum Transport von zumindest einer Paketreihe aufweist, wobei unterhalb der Übergabestation ein verfahrbarer Palettenwagen mit einer Aufnahme für eine zu beladende Palette angeordnet ist und wobei die Paketreihe von der Übergabestation auf eine in der Aufnahme gehaltene Palette ablegbar ist. Weiterhin betrifft die Erfindung ein Verfahren zum Ablegen von einer aus zumindest einem Paket gebildeten Paketreihe auf einer Palette.

Vorrichtungen der vorstehend genannten Art sind aus der Praxis grundsätzlich bekannt. Dabei hat es sich bewährt, zunächst eine Reihe von Paketen auszubilden und diese Reihe an eine Übergabestation weiterzureichen. Kritisch ist das Ablegen der einzelnen, die Paketreihe bildenden Pakete durch die Übergabestation auf der Palette. Es besteht die Möglichkeit, dass beim Ablegen der Pakete auf der Palette die Pakete beschädigt werden.

In FR 2 387 881 A1 wird eine Vorrichtung zum Ablegen von einer Paketreihe auf eine Palette beschrieben. Die Vorrichtung umfasst eine Paketreihenbildungstraße, eine Übergabestation sowie einen Palettenförderer. Die einzelnen Pakete werden in der Paketreihenbildungsstraße zu Paketreihen zusammengesetzt und dann mittels Schiebern der Übergabestation den Paletten übergeben. Sobald die einzelnen Paketreihen eine Palettenlage vervollständigt haben, wird die Palette mittels des Palettenförderers weiter verfahren und durch eine neue Palette ersetzt. Allerdings ist die Übergabestation nicht vertikal verfahrbar, so dass für unterschiedliche Lagen je ein Schieber in entsprechender Lagenhöhe empfohlen wird.

Der Erfindung liegt daher das technische Problem zugrunde, eine Vorrichtung der eingangs genannten Art anzugeben, mit der Pakete mit hoher Geschwindigkeit und hoher Funktionssicherheit auf einer Palette abgelegt werden können. Insbesondere liegt der Erfindung das technische Problem zugrunde, bekannte Vorrichtungen zu vereinfachen. Weiterhin liegt der Erfindung das technische Problem zugrunde, ein Verfahren zum Ablegen von Paketen auf einer Palette mit den vorstehenden Eigenschaften anzugeben.

Zur Lösung des technischen Problems lehrt die Erfindung eine Vorrichtung zum Ablegen von einer aus zumindest einem Paket gebildeten Paketreihe auf einer Palette, wobei der Palettenwagen synchron mit der von dem Fördermittel auf die Palette zu übergebenden Paketreihe und parallel bzw. im Wesentlichen parallel zur Förderrichtung der Paketreihe in der Übergabestation verfahrbar ist, dadurch gekennzeichnet, dass die Übergabestation in vertikaler Richtung verfahrbar ist. Bei dem Paket handelt es sich insbesondere um einen Stapel aus Druckerzeugnissen, Zuschnittstapeln und/oder Stapeln aus bedruckten Zeitungs- oder Buchseiten oder sonstigen Drucksachen. Es ist möglich, dass das Paket aus einem verschnürten und/oder vorzugsweise in Folie eingepackten Stapel aus Druckerzeugnissen gebildet ist. Grundsätzlich ist es möglich, dass das Paket von lose aufeinander liegenden Druckerzeugnissen gebildet ist. Die Paketreihe kann gemäß einer Ausführungsform aus einer Mehrzahl von Paketen gebildet sein, wobei vorteilhafterweise die Paketreihe eine Länge aufweist, die maximal so groß ist wie die Breite der zu beladenden Palette. Die Palette weist beispielsweise eine Breite von ungefähr 800 mm und eine Länge von ungefähr 1.200 mm auf. Es liegt im Rahmen der Erfindung, dass die Pakete in der Paketreihenbildungsstraße vorzugsweise fluchtend hintereinander angeordnet werden. Die Übergabestation ist zweckmäßigerweise in Transportrichtung der Pakete nach bzw. hinter der Paketreihenbildungsstraße angeordnet. Vorteilhafterweise ist die Übergabestation an einen Rahmen bzw. an ein Tragwerk der Vorrichtung angeschlossen. Förderrichtung in der Übergabestation meint die Richtung, in der die Paketreihe in der Übergabestation von einem paketreihenbildungsstraßenseitigen Ende zu einem dem paketreihenbildungsstraßenseitigen Ende gegenüberliegenden Ende (Abgabeende) gefördert werden.

Vorteilhafterweise ist der Palettenwagen zwischen einer Palettenwechselposition und einer Aufnahmeposition verfahrbar. In der Aufnahmeposition befindet sich der Palettenwagen unterhalb der Übergabestation, so dass die Übergabestation vorteilhafter Weise die Palette vollständig bzw. im Wesentlichen vollständig überdeckend oberhalb der Palette angeordnet ist. In der Palettenwechselposition befindet sich der Palettenwagen vorzugsweise vollständig außerhalb einer von der Übergabestation überdeckten Fläche. Es empfiehlt sich, dass in der Palettenwechselposition eine besonders bevorzugt beladene Palette von dem Palettenwagen an eine Weitertransporteinrichtung übergebbar ist, von welcher Weitertransporteinrichtung aus die beladene Palette von der Vorrichtung weggefördert wird. Gemäß einer Ausführungsform ist dem Palettenwagen in der Palettenwechselposition eine jungfräuliche bzw. unbeladene Palette zuführbar.

Besonders bevorzugt ist eine Vortriebsgeschwindigkeit v_{P} des Palettenwagens und eine Transportgeschwindigkeit v_{Ü} des Paketes bzw. der Pakete in der Übergabestation gleich hoch bzw. ungefähr gleich hoch. Die Geschwindigkeit, mit der die Palette verfahren wird, ist genauso hoch wie die Vortriebsgeschwindigkeit v_{P} des Palettenwagens, in welchem Palettenwagen die Palette vorzugsweise klemmend gehalten ist. Eine Geschwindigkeit, mit der das Paket von der Übergabestation mit dem Fördermittel auf die Palette abgelegt wird, ist empfohlenermaßen genauso hoch bzw. ungefähr genauso hoch wie die Transportgeschwindigkeit v_{Ü} und/oder die Vortriebsgeschwindigkeit vₚ der Palette. Es besteht bevorzugt keine Geschwindigkeitsdifferenz zwischen der Vortriebsgeschwindigkeit vₚ der Palette und der Geschwindigkeit des auf die Palette abzulegenden Pakets bzw. der auf die Palette abzulegenden Pakete. Auf diese Weise wird vermieden, dass beim Ablegen des Pakets auf die Palette Scherkräfte auf die palettenseitige Oberfläche des Pakets ausgeübt werden. Es ist möglich, dass der Palettenwagen beim Verfahren zwischen der Palettenwechselposition und der Aufnahmeposition in einem Schienensystem geführt ist.

Zweckmäßigerweise ist ein Zentrierrahmen vorgesehen, welcher Zentrierrahmen um die Palette und/oder um eine Paketlage umlegbar ist. Als Paketlage werden die in der Übergabestation aufgenommenen und vorzugsweise in einer Ebene auf der Palette ablegbaren Pakete bezeichnet. Es ist möglich, dass mehrere Paketlagen übereinander auf der Palette angeordnet werden. Vorzugsweise liegt der Zentrierrahmen an einer Stirnseite und/oder den Seitenflächen der Palette bzw. einer auf der Palette abgelegten Paketlage an. Es empfiehlt sich, dass der Zentrierrahmen eine Einlauföffnung aufweist, die vorteilhafterweise durch eine einschwenkbare Verschlussklappe verschließbar ist. Das Paket bzw. die Pakete wird bzw. werden von der Paketreihenbildungsstraße durch die Einlauföffnung an die Übergabestation übergeben. Von dem Fördermittel der Übergabestation ist das Paket bzw. sind die Pakete in eine vorgegebene bzw. vorgebbare Position in der Übergabestation in Bezug auf den Zentrierrahmen förderbar. Eine Höhe des Zentrierrahmens ist so bemessen, dass der Zentrierrahmen an Seitenflächen der Palette und/oder an Seitenflächen einer bereits auf der Palette befindlichen Paketlage anliegt bzw. zur Anlage bringbar ist. Höhe meint im Rahmen der Erfindung die Ausdehnung des Zentrierrahmens in vertikaler Richtung. Durch den Zentrierrahmen wird sichergestellt, dass beim Ablegen eines Paketes, insbesondere einer Paketlage, sichergestellt ist, dass ein unkontrolliertes Verrutschen der auf die Palette bzw. auf eine Paketlage abzulegenden Pakete vermieden wird. Es empfiehlt sich, dass der Zentrierrahmen ein Verschieben oder Verrutschen der Pakete einer bereits auf der Palette befindlichen Paketlage beim Auflegen einer weiteren Paketlage verhindert.

Gemäß einer bevorzugten Ausführungsform weist eine abgabeendseitige Stirnseite des Zentrierrahmens eine vorzugsweise ausschwenkbare Zentrierplatte auf, mit der die abgabeendseitige Stirnseite des Zentrierrahmens in Richtung eines Aufstellgrundes bzw. der Palette verlängerbar ist. Es liegt im Rahmen der Erfindung, dass die Stirnseite des Zentrierrahmens lediglich dann durch die Zentrierplatte verlängert wird, wenn die Zentrierplatte besonders bevorzugt zur Anlage an eine bereits auf die Palette gelegte Paketreihe bzw. Paketlage bringbar ist. Zweckmäßigerweise wird die Zentrierklappe mit der Maßgabe verfahren bzw. verschwenkt, dass die Zentrierklappe kontaktfrei zur Palette ist. Es liegt im Rahmen der Erfindung, dass eine von dem Zentrierrahmen umgebene Anordnung der Pakete einer Paketlage in der Übergabestation der Anordnung der Pakete dieser Paketlage nach dem Ablegen auf der Palette entspricht bzw. im Wesentlichen entspricht.

Besonders bevorzugt wird der Zentrierrahmen synchron mit dem Palettenwagen verfahren. Zweckmäßigerweise ist eine Verfahrgeschwindigkeit v_{Z} des Zentrierrahmens und die Vortriebsgeschwindigkeit v_{P} der Palette bzw. des Palettenwagens gleich hoch bzw. im Wesentlichen gleich hoch. Es liegt im Rahmen der Erfindung, dass die Verfahrrichtungen des Palettenwagens und des Zentrierrahmens parallel bzw. im Wesentlichen parallel sind. Besonders bevorzugt ist der Zentrierrahmen in einer horizontal bzw. im Wesentlichen horizontal orientierten Ebene synchron mit dem Palettenwagen verfahrbar. Zweckmäßigerweise sind die Verfahrrichtung der auf der Übergabestation von dem Fördermittel geförderten Paketreihe bzw. Paketes und die Verfahrrichtung des Zentrierrahmens bzw. Plattenwagens parallel bzw. im Wesentlichen parallel.

Es empfiehlt sich, dass die Übergabestation lediglich in vertikaler Richtung verfahrbar ist. Mit anderen Worten ist ein Verfahren der Übergabestation parallel zu der Förderrichtung des Fördermittels nicht möglich. Vorzugsweise ist der Zentrierrahmen zusammen mit der Übergabestation in vertikaler Richtung verfahrbar.

Empfohlenermaßen ist in der Übergabestation eine Mehrzahl von Paketreihen aufnehmbar, wobei die in der Übergabestation aufnehmbaren Paketreihen eine Paketlage bilden. Es empfiehlt sich, dass die Pakete bzw. die Paketreihen mit der Maßgabe in der Übergabestation angeordnet werden, dass die Pakete auf der Palette nach einem vorzugsweise vorgebbaren bzw. vorgegebenen Ablegeschema abgelegt werden. Gemäß einer bevorzugten Ausführungsform entspricht die von der Paketlage eingenommene Fläche ungefähr der paketlagenseitigen Oberfläche der Palette.

Gemäß einer Ausführungsform ist das Fördermittel der Übergabestation ein Förderband. Besonders bevorzugt bildet eine Vielzahl von vorzugsweise parallel bzw. ungefähr parallel zueinander angeordneten Förderbändern das Fördermittel. Es liegt im Rahmen der Erfindung, dass eine Paketreihe von der Paketreihenbildungsstraße auf das Fördermittel transferiert wird. Bevorzugt wird zumindest eine weitere Paketreihe und besonders bevorzugt eine Mehrzahl weiterer Paketreihen von der Paketreihenbildungsstraße an das Fördermittel übergeben, so dass eine Paketlage auf dem Fördermittel angeordnet ist. Es empfiehlt sich, dass die Förderbänder mit der Maßgabe antreibbar sind, dass die Umlaufgeschwindigkeit aller Förderbänder gleich bzw. ungefähr gleich ist. Auf diese Weise wird sichergestellt, dass ein Lagenbild der Paketreihe bzw. der Paketreihen in der Übergabestation dem Lagenbild der Paketreihe bzw. der Paketreihen nach dem Ablegen der Paketreihe bzw. Paketreihen auf der Palette entspricht. Lagenbild meint im Rahmen der Erfindung die Anordnung der einzelnen Paketreihen bzw. Pakete in einer Paketlage. Es empfiehlt sich, dass das Förderband bzw. die Förderbänder jeweils um eine an einem paketreihenbildungsstraßenseitigen Ende der Übergabestation angeordneten Umlenkrolle und um eine weitere, an dem paketreihenbildungsstraßenseitigen gegenüberliegenden Ende (Abgabeende) der Übergabestation angeordneten Umlenkrolle geführt werden. Gemäß einer Ausführungsform wird die Paketlage mit dem Fördermittel in Förderrichtung des Fördermittels in Richtung des Abgabeendes der Übergabestation gefördert. Vorzugsweise wird das Paket bzw. werden die Pakete der Paketreihe über die weitere Umlenkrolle an dem Abgabeende der Übergabestation auf die Palette gelegt. Das Paket bzw. die Pakete einer Paketreihe kippt bzw. kippen vorzugsweise über das Abgabeende und fallen bevorzugt auf die Palette. Besonders bevorzugt kippen die Paketreihen reihenweise auf die mit der Vortriebsgeschwindigkeit v_{P} verfahrende Palette, wenn eine Mehrzahl von Paketreihen in der Übergabestation aufgenommen ist. Empfohlenermaßen ist ein Abstand zwischen der Palette und der Übergabestation durch vertikales Verfahren der Übergabestation derart eingestellt, dass das Paket bzw. die Pakete aus einer möglichst geringen Höhe von der Übergabestation auf die Palette zur Ausbildung einer ersten Paketlage abgelegt werden.

Gemäß einer Ausführungsform ist der Zentrierrahmen nach dem Ablegen einer Paketlage entgegengesetzt der Förderrichtung der Pakete auf der Übergabestation verfahrbar (zurückfahrbar), bis der Zentrierrahmen empfohlenermaßen die Übergabestation umschließt. Das Zurückfahren des Zentrierrahmens kann synchron mit einem vertikalen Verfahren der Übergabestation gekoppelt sein. Gemäß einer Ausführungsform wird die Übergabestation derart in vertikaler Richtung mit dem vorzugsweise zurückgefahrenen Zentrierrahmen verfahren, dass mit der Übergabestation zumindest eine Paketreihe zur Ausbildung einer neuen Paketlage von der Paketreihenbildungsstraße übernehmbar ist. Die Übergabestation ist vorteilhafterweise nach dem Ablegen einer Paketlage auf der Palette mit der Maßgabe in vertikaler Richtung verfahrbar, dass die mit der zuletzt abgelegten Paketlage beladene Palette unter die Übergabestation in die Aufnahmeposition fahrbar ist. Es ist möglich, dass zunächst die Pakete der neuen Paketlage in der Übergabestation aufgenommen werden und im Anschluss die Übergabestation mit der neuen Paketlage in vertikaler Richtung verfahren wird. Besonders bevorzugt wird der Palettenwagen danach in die Aufnahmeposition verfahren.

Gemäß einer Ausführungsform ist eine Zuführungseinrichtung für Zwischenbögen vorgesehen, wobei ein Zwischenbogen auf die auf der Palette abgelegte Paketreihe bzw. auf eine Paketlage auflegbar ist. Grundsätzlich ist es möglich, dass ein Zwischenbogen auf eine jungfräuliche Palette auflegbar ist, bevor eine erste Paketreihe einer Paketlage auf die Palette aufgelegt wird. Empfohlenermaßen verfügt die Zuführeinrichtung über ein Magazin für eine Vielzahl von Zuführbögen.

Vorteilhafterweise weist die Vorrichtung ein Magazin für eine Mehrzahl von Paletten auf, von welchem Magazin aus dem Palettenwagen eine jungfräuliche bzw. unbeladene Palette zuführbar ist. Es liegt im Rahmen der Erfindung, dass dem Palettenwagen vorzugsweise lediglich in der Palettenladeposition eine jungfräuliche Palette zuführbar ist. Empfohlenermaßen wird der mit der jungfräulichen Palette versehene Palettenwagen aus der Palettenladeposition in die Aufnahmeposition verfahren.

Gemäß einer Ausführungsform weist die Paketreihenbildungsstraße einen Einlaufförderer und einen Übereckförderer auf, wobei seitlich an den Übereckförderer die Übergabestation anschließt. Der Einlaufförderer ist vorteilhafterweise als Schiebeförderer mit einer zwischengeschalteten Drehscheibe ausgebildet. Auf diese Weise ist es möglich, Pakete in der Paketreihenbildungsstraße um einen vorgebbaren Winkel, beispielsweise um einen Winkel von 90° oder 180°, zu drehen.

Empfohlenermaßen ist der Übereckförderer als ein den Einlaufförderer verlängernder Bandförderer ausgebildet und weist einen in diesen integrierten heb- und senkbaren Rollengang auf. Der Bandförderer weist eine Mehrzahl von Förderbändern auf. In dem Bandförderer ist ein mehrere Rollen aufweisender und besonders bevorzugt heb- und senkbarer Rollengang integriert. Die von dem Einlaufförderer zu dem Bandförderer transferierten Pakete bilden eine Paketreihe. Die Paketreihe ist im Rahmen der Erfindung von der Paketreihenbildungsstraße in die Übergabestation verschiebbar, indem der Rollengang des Übereckförderers angehoben wird und die nunmehr von dem Rollengang getragene Paketreihe empfohlenermaßen von den antreibbaren Rollen des Rollengangs zu dem Fördermittel der Übergabestation bewegt werden. Vorzugsweise wird die Paketreihe von dem Rollengang quer zur Förderrichtung des Bandförderers zu der Übergabestation gefördert.

Weiterhin betrifft die Erfindung ein Verfahren zum Ablegen von einer aus zumindest einem Paket gebildeten Paketreihe auf einer Palette, wobei in einer Paketreihenbildungsstraße eine Paketreihe ausgebildet wird, wobei die Paketreihe von der Paketreihenbildungsstraße an eine zumindest ein Fördermittel aufweisende Übergabestation übergeben wird, wobei die Paketreihe mit dem Fördermittel mit einer Transportgeschwindigkeit v_{F} in Richtung eines Abgabeendes der Übergabestation gefördert wird und von der Übergabestation auf einer unterhalb der Übergabestation auf einem Palettenwagen gehaltenen Palette abgelegt wird und wobei der Palettenwagen mit einer Vortriebsgeschwindigkeit v_{P} synchron mit der auf die Palette zu übergebenden Paketreihe und parallel bzw. im Wesentlichen parallel zur Förderrichtung der Paketreihe verfahren wird, dadurch gekennzeichnet, dass die Übergabestation in vertikaler Richtung verfahrbar ist. Besonders vorteilhaft ist die Vortriebsgeschwindigkeit v_{P} des Palettenwagens und die Transportgeschwindigkeit v_{F} des Fördermittels gleich bzw. ungefähr gleich, so dass kein bzw. kein wesentlicher Geschwindigkeitsunterschied zwischen der Palette und der Paketreihe auftritt.

Es empfiehlt sich, dass an die Übergabestation eine Mehrzahl von Paketreihen zur Ausbildung einer Paketlage übergeben wird und dass die Paketlage auf die Palette gelegt wird. Vorteilhafterweise wird um die Paketreihe bzw. um die Paketlage herum der Zentrierrahmen gelegt, der beim Ablegen der Paketreihe bzw. der Paketlage auf der Palette synchron mit der Palette und der Paketreihe bzw. Paketlage verfahren wird. Es empfiehlt sich, dass der Zentrierrahmen an den Seitenflächen und/oder der Stirnseite der Palette und/oder an den Seitenflächen und/oder Stirnseite einer bereits auf der Palette abgelegten Paketlage anliegt, wenn eine Paketlage von der Übergabestation auf die Palette gelegt wird. Auf diese Weise erfährt eine Beladung der Palette eine Stabilisierung, so dass das Aufbringen einer Paketlage von der Übergabestation auf die Palette funktionssicher möglich ist.

Der Erfindung liegt die Erkenntnis zugrunde, dass mit der erfindungsgemäßen Vorrichtung und dem erfindungsgemäßen Verfahren zuverlässig Pakete paketlagenweise auf einer Palette ablegbar sind. Wesentlich an dem erfindungsgemäßen Verfahren ist, dass sich die Übergabestation durch eine einfache Konstruktion und Steuerung auszeichnet. Dadurch, dass die erfindungsgemäße Übergabestation lediglich vertikal verfahrbar sein muss, kann die Konstruktion der Übergabestation sehr einfach gehalten werden. Ein mehrdimensionales Verfahren der Übergabestation ist bei der erfindungsgemäßen Vorrichtung und dem erfindungsgemäßen Verfahren nicht mehr erforderlich. In vorteilhafter Weise wird bei der erfindungsgemäßen Vorrichtung die Palette relativ zu der Übergabestation verfahren. Hohe Lasten werden von dem Palettenwagen aufgenommen, der jedoch in vorteilhafter Weise nicht vertikal verfahren werden muss. Weiterhin liegt der Erfindung die Erkenntnis zugrunde, dass eine erfindungsgemäße Vorrichtung und das erfindungsgemäße Verfahren problemlos und betriebssicher voll automatisch steuerbar sind, so dass sich die erfindungsgemäße Vorrichtung und das erfindungsgemäße Verfahren jeweils durch eine hohe Betriebssicherheit auszeichnet.

Nachfolgend wird die Erfindung anhand einer lediglich ein Ausführungsbeispiel darstellenden Zeichnung detailliert erläutert. Es zeigen
- Fig. 1: eine Ansicht einer erfindungsgemäßen Vorrichtung, bei der der Palettenwagen in die Ladeposition verfahren ist,
- Fig. 2: eine Ansicht der erfindungsgemäßen Vorrichtung, bei der der Palettenwagen in die Aufnahmeposition verfahren ist,
- Fig. 3: eine Seitenansicht der erfindungsgemäßen Vorrichtung in einer ersten Arbeitsstellung,
- Fig. 4: eine Seitenansicht der erfindungsgemäßen Vorrichtung in einer zweiten Arbeitsstellung,
- Fig. 5: eine Seitenansicht der erfindungsgemäßen Vorrichtung in einer dritten Arbeitsstellung,
- Fig. 6: eine Seitenansicht der erfindungsgemäßen Vorrichtung in einer vierten Arbeitsstellung und
- Fig. 7: eine Seitenansicht der erfindungsgemäßen Vorrichtung in einer fünften Arbeitsstellung.

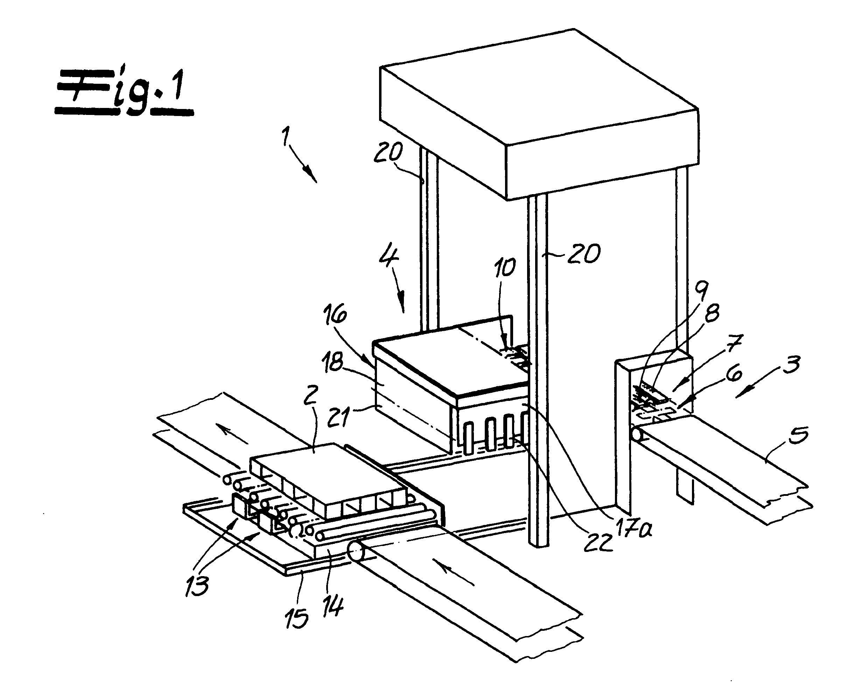

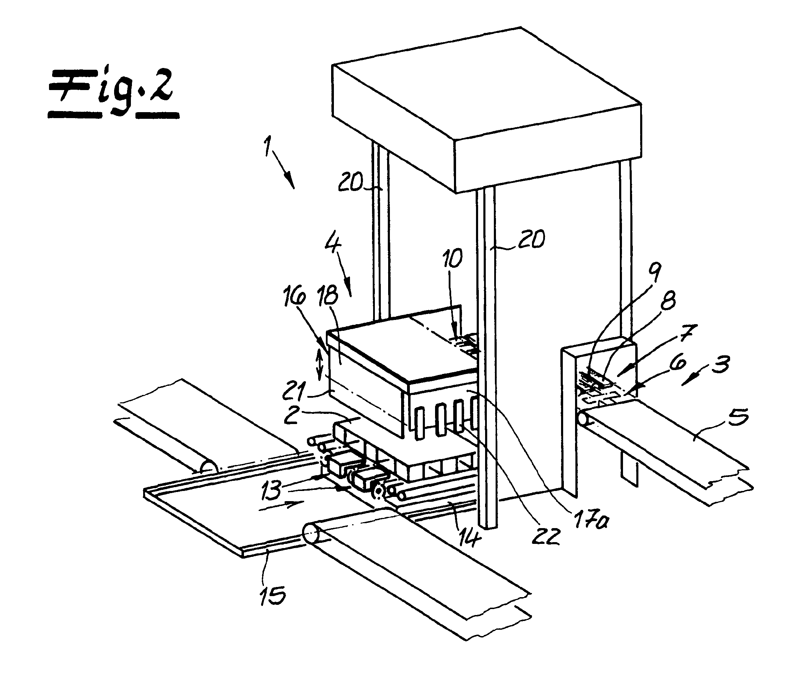

In den Fig. 1 und 2 ist eine Vorrichtung 1 zum Ablegen von einer aus zumindest einem Paket P gebildeten Paketreihe R auf eine Palette 2 dargestellt. Die Vorrichtung 1 verfügt über eine Paketreihenbildungsstraße 3, in der die Paketreihe R gemäß dem Ausführungsbeispiel aus einer Mehrzahl von Paketen P gebildet wird. Dazu werden in der Paketreihenbildungsstraße 3 mehrere Pakete P hintereinander angeordnet. An die Paketreihenbildungsstraße 3 schließt eine Übergabestation 4 an, an welche Übergabestation 4 die Paketreihe R von der Paketreihenbildungsstraße 3 übergebbar ist. Gemäß dem Ausführungsbeispiel beinhaltet die Paketreihenbildungsstraße 3 einen Einlaufförderer 5 mit einer Drehscheibe 6, mit welcher Drehscheibe 6 ein Paket P in der Paketreihenbildungsstraße 3 um einen vorgebbaren Winkel drehbar ist. An den Einlaufförderer 5 der Paketreihenbildungsstraße 3 schließt ein Übereckförderer 7 an, der von einem Bandförderer 8 gebildet ist. In den Bandförderer 7 ist ein hebbarer und senkbarer Rollengang 9 integriert, wobei durch Anheben des Rollengangs 9 auf dem Bandförderer 8 transportierte Pakete P anhebbar sind und durch Antreiben der Rollen des Rollengangs 9 zu der Übergabestation 4 bewegt werden können.

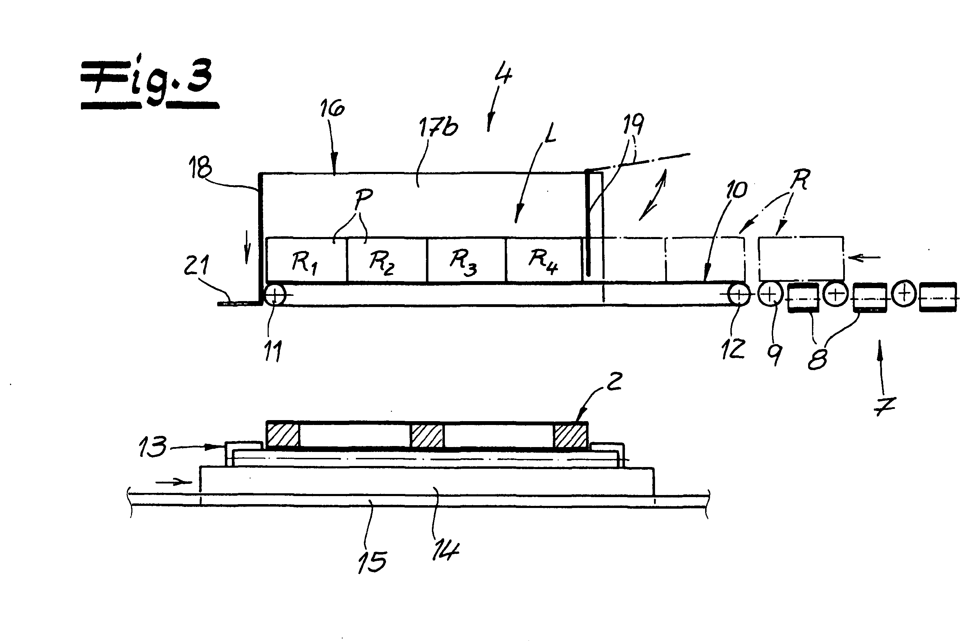

Gemäß dem Ausführungsbeispiel weist die Übergabestation 4 einen Boden auf, auf dem gemäß dem Ausführungsbeispiel parallel zueinander orientierte Förderbänder 10 angeordnet sind. In den Fig. 3 bis 7 ist dargestellt, dass die Förderbänder 10 der Übergabestation 4 jeweils um eine abgabeendseitige Umlenkrolle 11 und eine übereckfördererseitige Umlenkrolle 12 geführt sind. Die Förderbänder 10 sind mit der Maßgabe antreibbar, dass in der Übergabestation 4 aufgenommene Pakete P über die abgabeseitige Umlenkrolle 11 auf die Palette 2 abgelegt werden können. Die Palette 2 ist in einer Aufnahme 13 eines Palettenwagens 14 gehalten, welcher Palettenwagen 14 gemäß den Fig. 1 und 2 unterhalb der Übergabestation 4 in Führungsschienen 15 geführt ist. Der Palettenwagen 14 ist zwischen der in Fig. 1 dargestellten Ladeposition bzw. Palettenwechselposition und der in Fig. 2 dargestellten Aufnahmeposition verfahrbar.

Zum Ablegen einer Paketreihe R auf die Palette 2 wird der Palettenwagen 14 gemäß dem Ausführungsbeispiel zunächst in die in Fig. 1 dargestellten Palettenwechselposition verfahren, woraufhin eine jungfräuliche bzw. unbeladene Palette 2 in der Aufnahme 13 für die Palette 2 auf dem Palettenwagen 14 fixiert wird. Der mit der Palette 2 beladene Palettenwagen 14 wird dann in die in Fig. 2 dargestellte Aufnahmeposition verfahren, in welcher Aufnahmeposition die Palette 2 vollständig unterhalb der Übergabestation 4 angeordnet ist. In Fig. 3 ist dargestellt, dass in der Übergabestation 4 vier Paketreihen R₁, R₂, R₃, R₄ aufgenommen sind, welche Paketreihen R₁, R₂, R₃, R₄ auf die Palette 2 abgelegt werden sollen. Die Anordnung der Paketreihen R₁, R₂, R₃, R₄ stellt dabei eine Paketlage L dar. Um die Paketlage L wird ein Zentrierrahmen 16 gelegt, welcher Zentrierrahmen Seitenblenden 17a, 17b aufweist, die zur Anlage an Seitenflächen der Paketlage L gebracht werden. Eine Stirnseite des Zentrierrahmens 16 ist mit einer Stirnwand 18 versehen, an welcher Stirnwand 18 gemäß dem Ausführungsbeispiel und Fig. 3 die Paketreihe R₁ anliegt. Ein übereckfördererseitiges Ende des Zentrierrahmens 16 ist mit einer Eingangsklappe 19 verschließbar, welche Eingangsklappe 19 bei der Übergabe der die Paketlage L bildenden Paketreihen R ausschwenkbar ist und nach der Übergabe der die Paketlage L bildenden Paketreihen R₁, R₂, R₃, R₄ an die Übergabestation 4 einschwenkbar ist, so dass der Zentrierrahmen 16 an den Seitenwänden der Paketlage L anliegt. Dies ist in Fig. 3 dargestellt.

Nach der Aufnahme der Paketlage L in dem Zentrierrahmen 16 auf den Förderbändern 10 der Übergabestation 4 wird die Übergabestation 4 derart vertikal in Richtung der Palette 2 verfahren, dass ein Abstand zwischen der Palette 2 und den die Paketlage L bildenden Paketreihen R₁, R₂, R₃ und R₄ minimiert ist.

Um die Paketlage L auf der Palette 2 abzulegen, werden die Förderbänder 10 der Übergabestation 4 mit der Maßgabe angetrieben, dass die Paketlage L in Richtung der abgabeendseitigen Umlenkrolle 11 bewegt wird. Zusammen mit den auf den Förderbändern 10 transportierten Paketen P bzw. der Paketlage L wird der Palettenwagen 14 und der Zentrierrahmen 16 synchron verfahren. Gemäß dem Ausführungsbeispiel ist die Vortriebsgeschwindigkeit v_{P} des Palettenwagens 14 genauso hoch wie die Transportgeschwindigkeit v_{Ü} der Pakete P bzw. der Paketlage L auf den Förderbändern 10 der Übergabestation 4 und die Verfahrgeschwindigkeit v_{Z} des Zentrierrahmens 16. Auf diese Weise wird gemäß dem Ausführungsbeispiel erreicht, dass beim Ablegen der Pakete P auf der Palette 2 keine Geschwindigkeitsdifferenz zwischen den auf die Palette 2 kippenden Paketen P und der Palette 2 besteht.

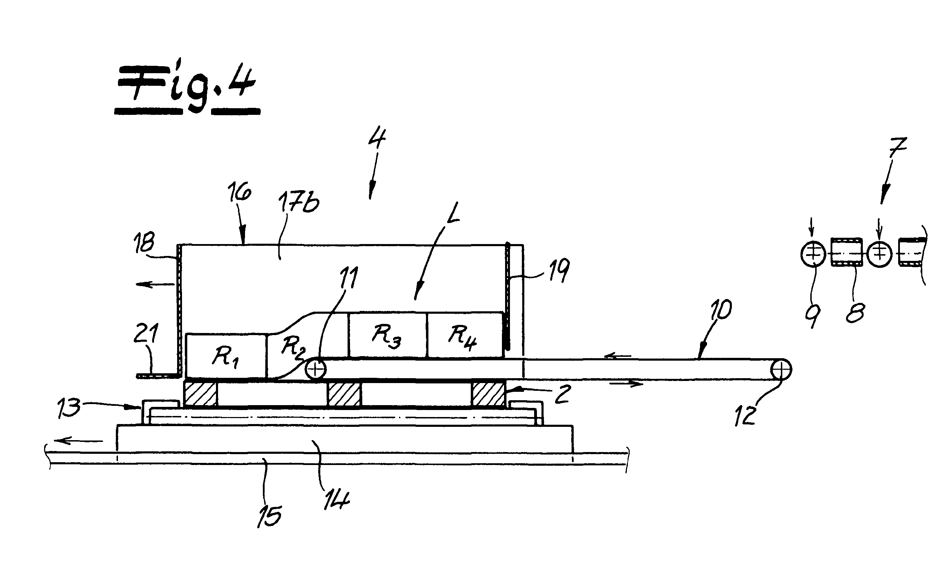

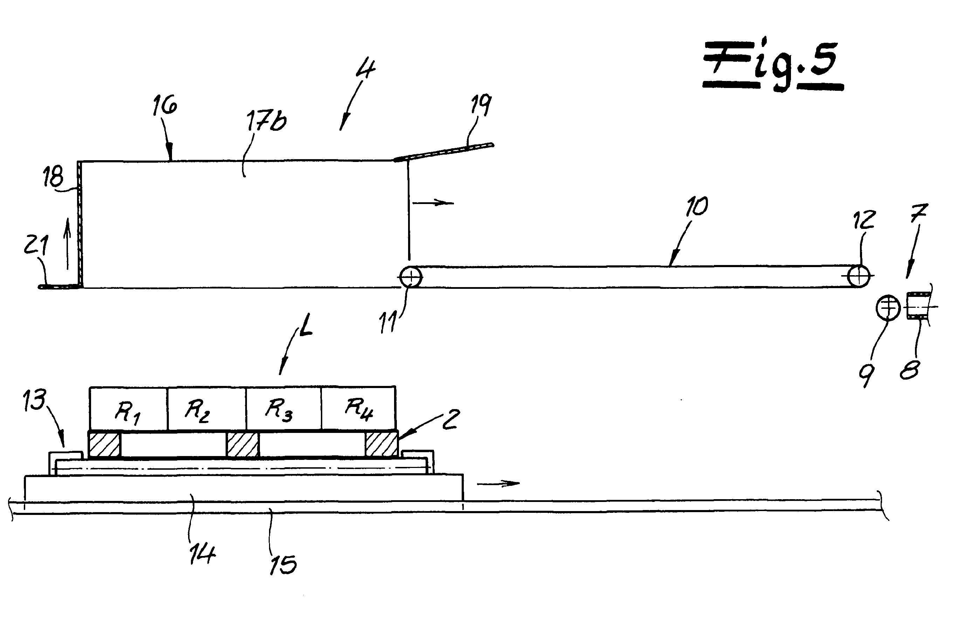

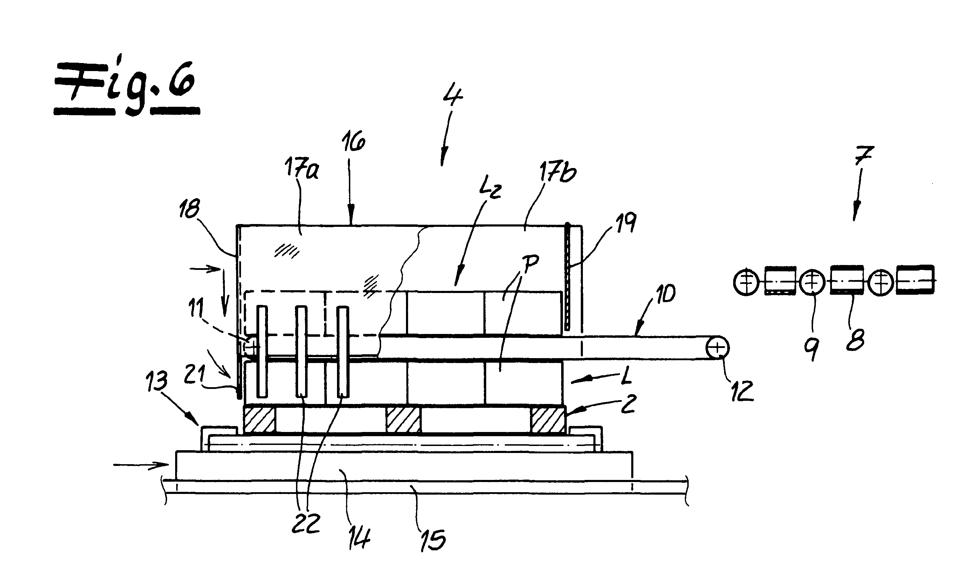

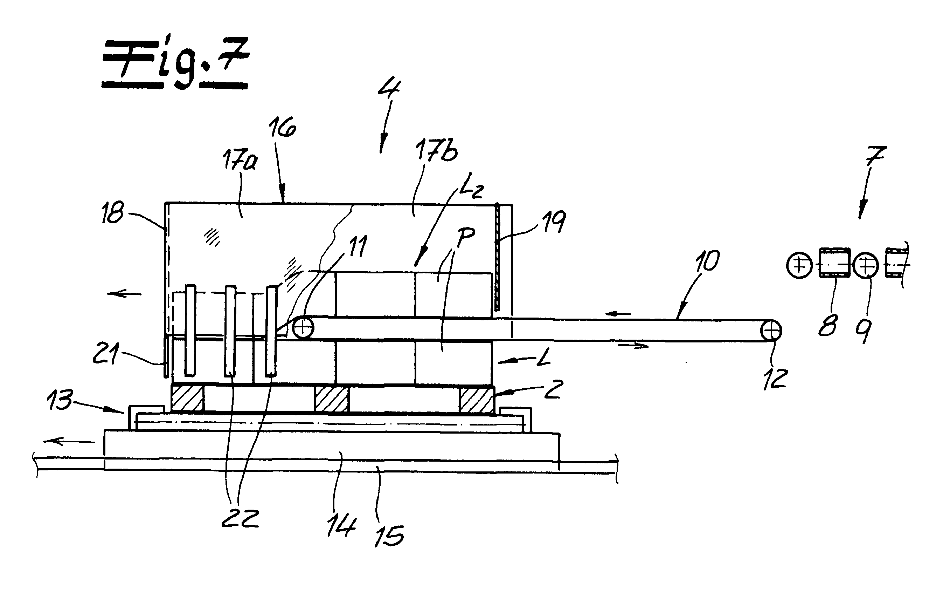

In Fig. 4 ist dargestellt, dass die Paketreihe R₁ bereits auf die Palette 2 abgelegt worden ist. Die Paketlage R₂ kippte über die abgabeendseitige Umlenkrolle 11 der Übergabestation 4 auf die Palette 2, während die Paketreihen R₃ und R₄ noch auf den Förderbändern 10 der Übergabestation 4 stehen. In Fig. 5 ist der Zustand dargestellt, in dem die Paketlage L auf der Palette 2 abgelegt ist. Um das Verfahren des Palettenwagens 14 in die Aufnahmeposition zu ermöglichen, wird die Übergabestation 4 in vertikaler Richtung entlang eines Tragwerks 20 der Vorrichtung 1 verfahren, so dass der Abstand zwischen der Palette 2 und einem bodenseitigen Ende der Übergabestation 4 so hoch ist, dass die mit der Paketlage L beladene Palette 2 in die Aufnahmeposition bzw. unter die Übergabestation 4 verfahrbar ist. In Fig. 6 ist dargestellt, dass der Zentrierrahmen 16 zusammen mit der Übergabestation 4 in vertikaler Richtung verfahren ist und dass der Zentrierrahmen 16 hinsichtlich der horizontalen Ausrichtung in die in Fig. 1 dargestellte Position zurückgezogen ist. Weiterhin ist in Fig. 6 dargestellt, dass die Stirnwand 18 des Zentrierrahmens 16 eine Zentrierklappe 21 aufweist, die in Fig. 6 ausgeschwenkt ist und an einer vorderen Stirnseite bzw. einer dem Übereckförderer 7 abgewandten Stirnseite der Paketlage L anliegt. Durch die Zentrierklappe 21 wird insbesondere verhindert, dass beim Ablegen einer in der Übergabestation 4 vorrätig gehaltenen zweiten Paketlage L₂ auf die Paketlage L die die Paketlage L bildenden Pakete verschoben werden. In den Fig. 1, 2, 6 und 7 ist darüber hinaus dargestellt, dass der Zentrierrahmen 16 über Zentrierzapfen 22 verfügt, welche Zentrierzapfen 22 an die Seitenblenden 17a, 17b angeschlossen sind und die gemäß den Fig. 3 bis 4 an den Seitenflächen der Palette 2 anliegen. In den Fig. 6 und 7 ist gezeigt, dass die Zentrierzapfen 22 an Seitenflächen der Paketlage L anliegen. Durch die Zentrierzapfen 22 wird ein seitliches Wegrutschen der Pakete P der Paketlage L beim Auflegen der Paketlage L₂ verhindert. Das Ablegen der Pakete P der Paketlage L₂ ist in Fig. 7 dargestellt und entspricht dem Ablegevorgang der Paketlage L auf die Palette 2 mit dem Unterschied, dass die Paketlage L₂ nicht unmittelbar auf die Palette 2, sondern auf die Paketlage L abgelegt wird. Dann wird der Palettenwagen 14 in die in Fig. 1 dargestellte Position verfahren. Die beladene Palette 2 wird von dem Palettenwagen 14 heruntergefahren und einer nicht dargestellten, weiteren Handhabungseinheit übergeben. In der Palettenwechselposition gemäß Fig. 1 wird dem Palettenwagen 14 dann eine neue, unbeladene Palette 2 zugeführt, die in dem Palettenwagen 14 klemmend fixiert wird. Alsdann wird der Palettenwagen 14 in die Aufnahmeposition gemäß Fig. 2 verfahren, woraufhin der Beladungsvorgang gemäß den Fig. 3 bis 7 und den vorstehenden Ausführungen wiederholt wird.

## Patentansprüche

1. Vorrichtung zum Ablegen von einer aus zumindest einem Paket P gebildeten Paketreihe (R, R₁, R₂, R₃, R₄) auf einer Palette (2), mit einer Paketreihenbildungsstraße (3) zur Ausbildung einer Paketreihe (R, R₁, R₂, R₃, R₄) und mit einer Übergabestation (4), wobei die Paketreihe (R, R₁, R₂, R₃, R₄) von der Paketreihenbildungsstraße (3) an die Übergabestation (4) übergebbar ist, wobei die Übergabestation (4) zumindest ein Fördermittel zum Transport von zumindest einer Paketreihe (R, R₁, R₂, R₃, R₄) aufweist, wobei unterhalb der Übergabestation (4) ein verfahrbarer Palettenwagen (14) mit einer Aufnahme für eine zu beladende Palette (2) angeordnet ist und wobei die Paketreihe (R, R₁, R₂, R₃, R₄) von der Übergabestation (4) auf einer in der Aufnahme gehaltenen Palette (2) ablegbar ist, und wobei der Palettenwagen (14) synchron mit der von dem Fördermittel auf die Palette (2) zu übergebenden Paketreihe (R, R₁, R₂, R₃, R₄) und parallel bzw. im Wesentlichen parallel zur Förderrichtung der Paketreihe (R, R₁, R₂, R₃, R₄) in der Übergabestation (4) verfahrbar ist,
**dadurch gekennzeichnet,**
**dass** die Übergabestation (4) in vertikaler Richtung verfahrbar ist.

2. Vorrichtung nach Anspruch 1 **dadurch gekennzeichnet, dass** eine Vortriebsgeschwindigkeit v_{P} des Palettenwagens (14) und eine Transportgeschwindigkeit v_{Ü} des Pakets P in der Übergabestation (4) beim Ablegen der Paketreihe (R, R₁, R₂, R₃, R₄) auf die Palette (2) gleich hoch bzw. ungefähr gleich hoch sind.

3. Vorrichtung nach einem der Ansprüche 1 oder 2, **dadurch gekennzeichnet, dass** ein Zentrierrahmen (16) vorgesehen ist, welcher Zentrierrahmen (16) um eine Paketlage L und/oder die Palette (2) umlegbar ist.

4. Vorrichtung nach Anspruch 3, **dadurch gekennzeichnet, dass** der Zentrierrahmen (16) beim Ablegen des Paketes P bzw. der Paketreihe (R, R₁, R₂, R₃, R₄) auf die Palette (2) synchron mit dem Palettenwagen (14) verfahrbar ist.

5. Vorrichtung nach einem der Ansprüche 3 oder 4, **dadurch gekennzeichnet, dass** eine Verfahrgeschwindigkeit v_{Z} des Zentrierrahmens (16) und die Vortriebsgeschwindigkeit v_{P} des Palettenwagens (14) bzw. der Palette (2) gleich hoch bzw. im Wesentlichen gleich hoch sind.

6. Vorrichtung nach einem der Ansprüche 1 bis 5, **dadurch gekennzeichnet, dass** die Übergabestation (4) lediglich in vertikaler Richtung verfahrbar ist.

7. Vorrichtung nach einem der Ansprüche 1 bis 6, **dadurch gekennzeichnet, dass** in der Übergabestation (4) eine Mehrzahl von Paketreihen aufnehmbar ist, wobei die in der Übergabestation (4) aufnehmbaren Paketreihen (R, R₁, R₂, R₃, R₄) eine Paketlage L bilden.

8. Vorrichtung nach einem der Ansprüche 1 bis 7, **dadurch gekennzeichnet, dass** das Fördermittel der Übergabestation (4) ein Förderband (10) ist.

9. Vorrichtung nach einem der Ansprüche 1 bis 8, **dadurch gekennzeichnet, dass** eine Zuführeinrichtung für Zwischenbögen vorgesehen ist, wobei ein Zwischenbogen auf die auf der Palette (2) abgelegte Paketreihe (R, R₁, R₂, R₃, R₄) bzw. auf eine Paketlage auflegbar ist.

10. Vorrichtung nach einem der Ansprüche 1 bis 9, **dadurch gekennzeichnet, dass** die Vorrichtung ein Magazin für eine Mehrzahl von Paletten (2) aufweist, von welchem Magazin aus dem Palettenwagen (14) eine jungfräuliche bzw. unbeladene Palette zuführbar ist.

11. Vorrichtung nach einem der Ansprüche 1 bis 10, **dadurch gekennzeichnet, dass** die Paketreihenbildungsstraße (3) einen Einlaufförderer (5) und einen Übereckförderer (7) aufweist, wobei seitlich an den Übereckförderer (7) die Übergabestation (4) anschließt.

12. Vorrichtung nach Anspruch 11, **dadurch gekennzeichnet, dass** der Einlaufförderer (5) als Bandförderer mit zwischengeschalteter Drehscheibe (6) ausgebildet ist.

13. Vorrichtung nach einem der Ansprüche 11 oder 12, **dadurch gekennzeichnet, dass** der Übereckförderer (7) als ein den Einlaufförderer (5) verlängernder Bandförderer (7) ausgebildet ist und einen in den Bandförderer (7) integrierten hebbaren und senkbaren Rollengang (9) aufweist.

14. Verfahren zum Ablegen von einer aus zumindest einem Paket P gebildeten Paketreihe (R, R₁, R₂, R₃, R₄) auf eine Palette (2), wobei in einer Paketreihenbildungsstraße (3) eine Paketreihe (R, R₁, R₂, R₃, R₄) ausgebildet wird, wobei die Paketreihe (R, R₁, R₂, R₃, R₄) von der Paketreihenbildungsstraße (3) an eine zumindest ein Fördermittel aufweisende Übergabestation (4) übergeben wird, wobei die Paketreihe (R, R₁, R₂, R₃, R₄) mit dem Fördermittel mit einer Transportgeschwindigkeit v_{F} in Richtung eines Abgabeendes der Übergabestation (4) gefördert wird und auf eine unterhalb der Übergabestation (4) auf einem Palettenwagen (14) gehaltenen Palette (2) abgelegt wird, **dadurch gekennzeichnet, dass** der Palettenwagen (14) mit einer Vortriebsgeschwindigkeit v_{P} synchron mit der auf die Palette (2) zu übergebenden Paketreihe (R, R₁, R₂, R₃, R₄) und parallel bzw. im Wesentlichen parallel zur Förderrichtung der Paketreihe verfahren wird, **dadurch gekennzeichnet,**
**dass** die Übergabestation (4) in vertikaler Richtung verfahrbar ist.

15. Verfahren nach Anspruch 14, wobei an die Übergabestation (4) eine Mehrzahl von Paketreihen (R, R₁, R₂, R₃, R₄) zur Ausbildung einer Paketlage L übergeben wird und wobei die Paketlage L auf die Palette (2) gelegt wird.

## Claims

1. A device for placing a packet series (R, R₁, R₂, R₃, R₄) comprised of at least one packet R onto a pallet (2), with a packet series forming line (3) for forming a packet series (R, R₁, R₂, R₃, R₄) and with a transfer station (4), wherein the packet series (R, R₁, R₂, R₃, R₄) can be transferred from the packet series forming line (3) to the transfer station (4), wherein the transfer station (4) exhibits at least one conveying means for transporting at least one packet series (R, R₁, R₂, R₃, R₄), wherein a movable pallet wagon (14) with a receptacle for a pallet (2) to be loaded is situated underneath the transfer station (4), and wherein the packet series (R, R₁, R₂, R₃, R₄) can be placed on a pallet (2) held in the receptacle from the transfer station (4), and wherein the pallet wagon (14) can be moved synchronously with the packet series (R, R₁, R₂, R₃, R₄) to be transferred from the conveying means to the pallet (2) and parallel or essentially parallel to the conveying direction of the packet series (R, R₁, R₂, R₃, R₄) in the transfer station (4), **characterized in that** the transfer station (4) can be moved in a vertical direction.

2. The device according to claim 1, **characterized in that** an advancing rate v_{P} of the pallet wagon (14) and a transport rate v_{ü} of the packet P in the transfer station (4) are identical or roughly identical while placing the packet series (R, R₁, R₂, R₃, R₄) onto the pallet (2).

3. The device according to one of claims 1 or 2, **characterized in that** a centering frame (16) is provided, wherein the centering frame (16) can be folded around a packet layer L and/or the pallet (2).

4. The device according to claim 3, **characterized in that** the centering frame (16) can be moved synchronously with the pallet wagon (14) while placing the packet P or packet series (R, R₁, R₂, R₃, R₄) onto the pallet (2).

5. The device according to one of claims 3 or 4, **characterized in that** a moving rate v_{Z} of the centering frame (16) and the advancing rate v_{P} of the pallet wagon (14) or pallet (2) are identical or essentially identical.

6. The device according to one of claims 1 to 5, **characterized in that** the transfer station (4) can only be moved in a vertical direction.

7. The device according to one of claims 1 to 6, **characterized in that** a plurality of packet series can be accommodated in the transfer station (4), wherein the packet series (R, R₁, R₂, R₃, R₄) that can be accommodated in the transfer station (4) form a packet layer L.

8. The device according to one of claims 1 to 7, **characterized in that** the conveying means of the transfer station (4) is a conveyor belt (10).

9. The device according to one of claims 1 to 8, **characterized in that** a feeder for inlays is provided, wherein an inlay can be placed onto the packet series (R, R₁, R₂, R₃, R₄) deposited onto the pallet (2) or onto a packet layer.

10. The device according to one of claims 1 to 9, **characterized in that** the device exhibits a cartridge for a plurality of pallets (2), wherein a maiden or unloaded pallet can be supplied to the pallet wagon (14) from this cartridge.

11. The device according to one of claims 1 to 20, **characterized in that** the packet series forming line (3) exhibits an inlet conveyor (5) and right-angle conveyor (7), wherein the transfer station (4) laterally adjoins the right-angle conveyor (7).

12. The device according to claim 11, **characterized in that** the inlet conveyor (5) is designed as a belt conveyor with interspersed rotary disk (6).

13. The device according to one of claims 11 or 12, **characterized in that** the right-angle conveyor (7) is designed as a belt conveyor (7) that extends the inlet conveyor (5), and exhibits a liftable and lowerable roller way (9) integrated into the belt conveyor (7).

14. A method for placing a packet series (R, R₁, R₂, R₃, R₄) comprised of at least one packet P onto a pallet (2), wherein a packet series (R, R1, R2, R3, R4) is formed in a packet series forming line (3), wherein the packet series (R, R₁, R₂, R₃, R₄) is transferred from the packet series forming line (3) to a transfer station (4) exhibiting at least one conveying means, wherein the packet series (R, R₁, R₂, R₃, R₄) is conveyed with the conveying means at a transport rate v_{F} in the direction of a dispensing end of the transfer station (4) and placed onto a pallet (2) held on a pallet wagon (14) underneath the transfer station (4), **characterized in that** the pallet wagon (14) is moved at an advancing rate V_{P} synchronously with the packet series (R, R₁, R₂, R₃, R₄) to be transferred onto the pallet (2) and parallel or essentially parallel to the conveying direction of the packet series, **characterized in that** the transfer station (4) can be moved in a vertical direction.

15. The method according to claim 14, wherein a plurality of packet series (R, R₁, R₂, R₃, R₄) for forming a packet layer L is transferred to the transfer station (4), and wherein the packet layer L is placed onto the pallet (2).

## Revendications

1. Dispositif pour le dépôt d'une série de paquets (R, R₁, R₂, R₃, R₄) composée d'au moins un paquet P sur une palette (2), sur une chaîne de formation de séries de paquets (3) pour la formation d'une série de paquets (R, R₁, R₂, R₃, R₄) et avec une station de transfert (4), la série de paquets (R, R₁, R₂, R₃, R₄) pouvant être transférée à la station de transfert (4) par la chaîne de formation de séries de paquets (3), la station de transfert (4) comprenant au moins un moyen de transport destiné à transporter l'au moins une série de paquets (R, R₁, R₂, R₃, R₄), un transpalette (14) déplaçable avec un support pour une palette (2) à charger étant agencé sous la station de transfert (4), et la série de paquets (R, R₁, R₂, R₃, R₄) pouvant être déposée par la station de transfert (4) sur une palette (2) maintenue sur le support, et le transpalette (14) pouvant être déplacé de façon synchrone avec la série de paquets (R, R₁, R₂, R₃, R₄) à déposer sur la palette (2) par le moyen de transport, et parallèlement ou quasiment parallèlement à la direction de transport de la série de paquets (R, R₁, R₂, R₃, R₄) dans la station de transfert (4), **caractérisé en ce que** la station de transfert (4) est déplaçable dans une direction verticale.

2. Dispositif selon la revendication 1, **caractérisé en ce qu'**une vitesse d'avancement v_{P} du transpalette (14) et une vitesse de transport v₀ du paquet P dans la station de transfert (4) lors du dépôt de la série de paquets (R, R₁, R₂, R₃, R₄) sur la palette (2) sont identiques ou approximativement identiques.

3. Dispositif selon l'une des revendications 1 ou 2, **caractérisé en ce qu'**il est prévu un cadre de centrage (16), ledit cadre de centrage (16) pouvant être disposé autour d'une couche de paquets L et/ou d'une palette (2).

4. Dispositif selon la revendication 3, **caractérisé en ce que** le cadre de centrage (16) peut être déplacé de façon synchrone avec le transpalette (14) lors du dépôt du paquet P ou de la série de paquets (R, R₁, R₂, R₃, R₄) sur la palette (2).

5. Dispositif selon l'une des revendications 3 ou 4, **caractérisé en ce qu'**une vitesse de déplacement v_{z} du cadre de centrage (16) et la vitesse d'avancement vₚ du transpalette (14) ou de la palette (2) sont identiques ou quasiment identiques.

6. Dispositif selon l'une des revendications 1 à 5, **caractérisé en ce que** la station de transfert (4) est déplaçable uniquement dans une direction verticale.

7. Dispositif selon l'une des revendications 1 à 6, **caractérisé en ce qu'**une pluralité de séries de paquets peut être admise dans la station de transfert (4), les série de paquets (R, R₁, R₂, R₃, R₄) recevables dans la station de transfert (4) formant une couche de paquets L.

8. Dispositif selon l'une des revendications 1 à 7, **caractérisé en ce que** le moyen de transport de la station de transfert (4) est une bande de transport (10).

9. Dispositif selon l'une des revendications 1 à 8, **caractérisé en ce qu'**il est prévu un dispositif d'alimentation pour des fonds intermédiaires, un fond intermédiaire pouvant être disposé sur la série de paquets (R, R₁, R₂, R₃, R₄) déposée sur la palette (2) ou sur une couche de paquets.

10. Dispositif selon l'une des revendications 1 à 9, **caractérisé en ce que** le dispositif comprend un magasin pour une pluralité de palettes (2), une palette vierge ou non chargée pouvant être amenée depuis ce magasin à partir du transpalette (14).

11. Dispositif selon l'une des revendications 1 à 10, **caractérisé en ce que** la chaîne de formation de séries de paquets (3) comprend un transporteur d'entrée (5) et un transporteur d'angle (7), la station de transfert (4) étant agencée latéralement à la suite du transporteur d'angle (7).

12. Dispositif selon la revendication 11, **caractérisé en ce que** le transporteur d'entrée (5) est conçu comme une bande transporteuse avec une plaque tournante intermédiaire (6).

13. Dispositif selon l'une des revendications 11 ou 12, **caractérisé en ce que** le transporteur d'angle (7) est conçu comme une bande transporteuse (7) prolongeant le transporteur d'entrée (5) et comprend un train de rouleaux (9) relevable et abaissable intégré dans la bande transporteuse (7).

14. Procédé pour le dépôt d'une série de paquets (R, R₁, R₂, R₃, R₄) constituée d'au moins un paquet P sur une palette (2), une série de paquets (R, R₁, R₂, R₃, R₄) étant formée dans une chaîne de formation de séries de paquets (3), la série de paquets (R, R₁, R₂, R₃, R₄) étant transférée vers une station de transfert (4) comprenant au moins un moyen de transport par la chaîne de formation de séries de paquets (3), la série de paquets (R, R₁, R₂, R₃, R₄) étant transportée par le moyen de transport, à une vitesse de transport v_{F}, dans la direction d'une extrémité de dépôt de la station de transfert (4), et déposée sur une palette (2) maintenue sur un transpalette (14) en dessous de la station de transfert (4), **caractérisé en ce que** le transpalette (14) est déplacé à une vitesse d'avancement v_{P}, de façon synchrone avec la série de paquets (R, R₁, R₂, R₃, R₄) à transférer sur la palette (2) et parallèlement ou quasiment parallèlement à la direction de transport de la série de paquets, **caractérisé en ce que** la station de transfert (4) est déplaçable dans une direction verticale.

15. Procédé selon la revendication 14, dans lequel une pluralité de séries de paquets (R, R₁, R₂, R₃, R₄) est remise à la station de transfert (4) pour former une couche de paquets L, et la couche de paquets L étant disposée sur la palette (2).
